# EUROPEAN PATENT APPLICATION

(11) **EP 1 500 433 A1**
(43) Date of publication of application: **26.01.2005**
(21) Application number: 03725685.6
(22) Date of filing: 28.04.2003
(51) Int. Cl.: B01J 23/63, C01B 3/40

(54) **CATALYST FOR PARTIAL OXIDATION OF HYDROCARBON, PROCESS FOR PRODUCING THE SAME, PROCESS FOR PRODUCING HYDROGEN-CONTAINING GAS WITH THE USE OF THE CATALYST AND METHOD OF USING HYDROGEN-CONTAINING GAS PRODUCED WITH THE USE OF THE CATALYST**

(30) Priority: 30.04.2002 JP 2002129121
(71) Applicant: Nippon Shokubai Co., Ltd., Osaka-shi, Osaka 541-0043 (JP)
(72) Inventor: OSAKA, Shigemi, Himeji-shi, Hyogo 671-1144 (JP); OKUNO, Masaaki, Himeji-shi, Hyogo 671-1112 (JP)
(74) Representative: Müller-Boré & Partner Patentanwälte
(86) International application number: PCT/JP2003/005421
(87) International publication number: WO 2003/092888

(57) **Abstract**

A partial oxidation catalyst of hydrocarbons; comprising a monolith support carrying a catalyst component, the catalyst component comprising a refractory inorganic oxide carrying an element of platinum group (a) and a refractory inorganic oxide (b).

## Description

### TECHNICAL FIELD

The present invention relates to a catalyst for use in production of a hydrogen-containing gas from hydrocarbons and to a process of producing the hydrogen-containing gas by a use of the catalyst. In particular, the present invention relates to a partial oxidation catalyst of hydrocarbons for production of a hydrogen-containing gas from a mixed gas consisting of a hydrocarbon-containing gas and an oxygen gas (or an oxygen-containing gas), a process for producing the catalyst, a process for producing a hydrogen-containing gas from hydrocarbons by the use of said catalyst, and a method of using the hydrogen-containing gas (or a hydrogen gas produced from the hydrogen-containing gas) produced with the use of the catalyst.

### BACKGROUND ART

Hydrogen-containing gases mainly consisting of hydrogen and carbon monoxide (hereinafter, referred to as raw gases) have been widely used, for example, as the gases for production of pure hydrogen gas and for reduction of various materials or as the raw material for various chemicals. A variety of researches to put the hydrogen-containing gas into practical use as a fuel for fuel cells have been intensively conducted recently. The processes for producing the hydrogen-containing gas by reforming hydrocarbons known in the art include partial oxidation of hydrocarbons and steam reforming and autothermal reforming, which is a combination of the partial oxidation and the steam reforming.

In the partial oxidation processes wherein a hydrogen-containing gas is produced by partial oxidation of hydrocarbons (e.g., partial oxidation of methane can be represented by the equation: CH₄+1/2O₂→CO+2H₂), the following catalysts, for example, have been employed. Japanese Unexamined Patent Publication No. 59-97501 suggests as the catalyst for partial oxidation a monolithic partial oxidation catalyst consisting of a monolithic carrier, an activated alumina layer on the surface thereof containing as a stabilizer an oxide of metal such as lanthanum or cerium, and additionally an element such as platinum or palladium contained in the activated alumina layer as a catalytically active component. Alternatively, Japanese Unexamined Patent Publication No. 01-145301 suggests a monolithic partial oxidation catalyst constructed such that an element such as a noble metal, Ni, Cr, Co, Ce, and La is supported on a honeycomb-shaped carrier, as a catalytically active component. Published Japanese Translation of PCT International Publication for Patent Applications No. 2002-507535 describes a partial oxidation catalyst of hydrocarbons wherein rhodium is supported on a ceria and zirconia mixed oxide. The technology described in the patent publication above relates to a process that employs a pelletized catalyst used only on condition that the partial oxidation of reactive gases is conducted in the presence of steam supplied. Accordingly, in the partial oxidation reaction of methane with oxygen, for example, the conversion rate of methane drops to a level as low as about 45% in the condition where no steam is supplied. Japanese Unexamined Patent Publication No. 7-187605 describes a method for reforming lower hydrocarbon fuels, wherein a mixed gas consisting of a raw gas, oxygen (or air), and steam if desired is subjected to the partial oxidation reaction. The patent application discloses a honeycomb carrier having alumina coated thereon in a thickness of about 100 µm and platinum group elements supported further thereon, in which the platinum group elements are supported in an amount of 5 to 20 g in 1 L of the honeycomb carrier. Japanese Unexamined Patent Publication No. 2002-12408 proposes an autothermal reforming method using a mixed gas consisting of hydrocarbons, oxygen and water or steam. The patent application discloses a catalyst comprising a carrier such as a ceramic honeycomb and a catalyst component consisting of an oxide carrier substance selected from the groups consisting of aluminium oxide, silicon dioxide, titanium dioxide, or a mixed oxide thereof, and zeolites and at least one platinum group element contained therein.

After an intensive study on the catalyst for producing hydrogen-containing gases by partial oxidation of hydrocarbon gases, the present inventors have found that there are the following problems associated with the conventional technology.

For example, when commonly used hydrocarbon gases such as methane and natural gases are used, it is said to be preferable to conduct the partial oxidation reaction at a high temperature of 800°C or more for obtaining high methane conversion rate. However, the reaction heat generated during the partial oxidation puts extremely high thermal load on the catalyst layer, causing the problem of deterioration in catalytic activity over time. In addition, the partial oxidation reaction is also accompanied by a carbon-generating reaction (side reaction), the carbon deposited thereby further causing deterioration in the catalytic activity. For prevention of the carbon deposition, steam should be added into the raw gas.

In addition, the catalyst poisons such as sulfur-containing compounds which are inevitably contained in the natural gas cause the problem of poisoning of catalyst, i.e., deterioration in catalytic activity over time. Thus, the natural gases are used for the partial oxidation reaction after they are previously treated in desulfurization equipment or the like for eliminating the catalyst poisons. However, installation of additional equipment for removal of catalytic poisons such as desulfurization unit or the like leads to the problems of the entire partial oxidation reaction system becoming more complicated, higher maintenance cost, and the like.

The present invention has been completed in view of the problems above, and an object of the invention is to provide a poisoning-resistant and high-activity catalyst with extended durability, while suppressing the deterioration in catalytic activity under a high temperature and the deposition of carbon thereon and a process for producing the partial oxidation catalyst. Other objects of the present invention are to provide a process for producing a hydrogen-containing gas (or hydrogen gas) by partial oxidation of hydrocarbons by the use of the catalyst and to provide a method of using hydrogen-containing gas produced with the use of the catalyst.

### DISCLOSURE OF THE INVENTION

The partial oxidation catalyst of hydrocarbons according to the present invention is characterized in that the catalyst is a monolithic carrier supporting a catalyst component and the catalyst component further comprises a refractory inorganic oxide (a) supporting a platinum group element and a refractory inorganic oxide (b).

### DESCRIPTION OF THE PREFERRED EMBODIMENTS

It is generally known that the catalytic compositions based on platinum group elements such as platinum, palladium, rhodium, iridium and the like are better in heat resistance and resistance to catalyst poisoning than the compositions based on base metal elements such as nickel, iron, cobalt and the like, and thus suited as the main active ingredient for the partial oxidation catalyst of hydrocarbons.

However, as the platinum group elements are more expensive, from the viewpoint of cost-effectiveness, the amount of the platinum group elements used in catalysts should be limited (e.g., to 5 mass % or less in the catalysts) for providing practical catalysts. Accordingly, in an effort to make the most of the platinum group elements, the present inventors have prepared catalysts for partial oxidation consisting of a refractory inorganic oxide such as activated alumina having a large surface area and a platinum group elements supported thereon uniformly and dispersedly as much as possible, and examined the performance thereof. As a result, when used at high temperature for an extended period of time, such catalysts were found to raise problems of the catalytic performance including deterioration in catalytic activity over time, for example, because of the growth in size of the platinum group element particles, the reaction thereof with the carrier substance, conversion to an inactive state due to chemical change of the platinum group element, or reactions with poisoning substances contained in raw gases such as sulfur-containing substances and the like.

After a further study to solve the problem described above, the present inventor have found that the monolithic carrier that supports a catalyst component comprising a refractory inorganic oxide (a) whereon a platinum group element is previously supported and a refractory inorganic oxide (b) can attain the level that satisfies the various performances demanded for the catalyst for partial oxidation of hydrocarbons.

In the present invention, a monolithic carrier is used as the carrier. Monolithic carriers are recommended because they have lower pressure drop ability and are more resistant to pulverization than the carrier in other shapes such as pelletized, spherical, powdery, granular, and other carriers, and easier in handling. Use of the material superior in heat strength and pulverization-resistance is desirable for retaining the shape of carriers even at the high temperature during the partial oxidation reaction, and preferred examples thereof include oxides and silicate salts such as cordierite, mullite, α-alumina, zirconia, titania, alumina-silicate, magnesium silicate; stainless steel, heat-resistant alloys such as Fe-Cr-Al alloys, and the like. These substances may be used alone or in combination of two or more for preparing the monolithic carriers. Among these materials, carriers mainly (50 mass % or more) containing cordierite that has great heat strength and heat shock resistances are most preferable. The monolithic carriers have numerous penetrating holes (cells) arranged in the parallel direction, and the hole may be in any kind of shape, for example, circular and polygonal such as triangular, rectangular, and hexagonal, and the diameter thereof is not particularly limited.

The density of cell in the carrier is not particularly limited, but is recommended to be preferably 150 to 600 cell/square inch, more preferably 250 to 600 cell/square inch, in order to increase an efficiency of the contact between the carrier and the reaction gas. Too higher cell density (the number of cells per square inch) sometimes leads to decrease in the size of individual cells, causing clogging of the cells in the carrier. On the contrary, too smaller cell density sometimes leads to decrease in contact area and thus to insufficient catalytic efficiency.

In the present invention, a catalyst component is supported on the monolithic carrier. The catalyst components are compositions containing a refractory inorganic oxide (a) supporting a platinum group element and another refractory inorganic oxide (b). In order to attain the object of the present invention, catalyst components substantially containing a refractory inorganic oxide (a) supporting a platinum group element and another refractory inorganic oxide (b) may be used. The catalyst components containing the refractory inorganic oxide (a) and (b) may also be, for example, catalysts containing unavoidable impurities as well as the refractory inorganic oxides (a) and (b). Alternatively, the catalyst components may be catalyst components containing, as well as the refractory inorganic oxides (a) and (b), any other refractory inorganic oxide [e.g., a refractory inorganic oxide (a) not supporting a platinum group element]. Depending on the desired application, they may additionally contain other promoters or the like in an amount that does not interfere with the advantageous effect of the present invention.

In the present invention, any inorganic oxides may be used as the refractory inorganic oxide for the refractory inorganic oxide (a) supporting a platinum group element, and the refractory inorganic oxide (b), if they are stable both in shape and performance at high temperature (e.g., 300 to 1000°C). In particularly, preferable is at least one inorganic oxide selected from the group consisting of alumina (particularly, activated alumina), zirconium oxide, and cerium oxide. These preferred refractory inorganic oxides may of course be used together with any other refractory inorganic oxides (including mixtures or compound oxides). Examples thereof include lanthanum oxide, titanium oxide, silica, magnesium oxide, and the mixtures or compound oxides thereof. Examples of the compound oxides include alumina-ceria, alumina-lanthanum oxide, alumina-magnesia, alumina-silica, alumina-zirconia, stabilized zirconia, zirconia-ceria, zirconia-lanthanum oxide, and the like.

Preferable as the refractory inorganic oxide (a) is at least one inorganic oxide selected from the group consisting of activated alumina, cerium oxide, and zirconium oxide. These refractory inorganic oxides are desirable because they excel in heat resistance at high temperature and retain the platinum group element more firmly. Among the refractory inorganic oxides, use of activated alumina is most preferred. Activated alumina is preferable because it, having larger specific surface area and thus larger contact area with the reaction gas, allows increase in the efficiency of partial oxidation, and is superior in heat resistance at high temperature. In addition, supporting of a platinum group element on activated alumina [as the refractory inorganic oxide (a)] allows retention of the catalytic property of the resulting component over an extended period of time as described below.

Such activated aluminas include for example α-alumina, γ-alumina, δ-alumina, θ-alumina, η-alumina, and the like. The shape or the like of the activated aluminas is not particularly limited, but activated aluminas preferably have a specific surface area of 25 to 250 m²/g.

The amount of the platinum group element supported on the refractory inorganic oxide (a) according to the present invention is preferably 0.4 to 40 mass % (with respect to the sum of the refractory inorganic oxide (a) and the platinum group element), more preferably 1 to 30 mass %, still more preferably 5 to 25 mass %. Use of the platinum group element in an amount of 0.4 mass % or more allows increase in heat-resistance and suppression of the deterioration in catalytic activity. The content thereof in an amount of over 40 mass % may lead to decrease in the number of the sites of the platinum group element effective for promoting the reaction and thus to decrease in the catalytic efficiency of partial oxidation reaction.

Examples of the platinum group elements include platinum, rhodium, palladium, ruthenium and iridium. Among them, use of at least one element selected from the group consisting of platinum, rhodium and iridium is preferable, as such an element allows the resulting catalysts to exhibit greater advantageous effects described above. These platinum group elements may of course be used in any combination of two or more of these elements. In such cases, use of platinum as the essential component in the refractory inorganic oxide (a) is preferable, as it allows further increase in catalytic activity for partial oxidation of hydrocarbons. The content of platinum is preferably 50 mass % or more (with respect to the total of all platinum group elements) for obtaining better partial oxidation activity, more preferably 60 mass % or more, still more preferably 70 mass % or more (the balance may contain any other platinum group elements). If multiple platinum group elements are used together, the combinations of platinum-rhodium, platinum-iridium, and platinum-rhodium-iridium are preferable, and the combination of platinum-rhodium is most preferable.

The average particle diameter (a diameter of the particles in final catalyst) of the refractory inorganic oxide (a) supporting a platinum group element is preferably 0.5 to 20 µm, more preferably 1 to 15 µm. Carriers supporting the refractory inorganic oxide (a) having the average particle diameter exhibit superior durability at high temperature while retaining the catalytic activity as a partial oxidation catalyst, and provide longer-lasting catalysts for partial oxidation. The diameter of the particles of refractory inorganic oxide (a) in the final catalyst can be determined, for example, by taking photos of the coated layer (surface layer) of the catalysts using an Electron Probe Micro Aanalyzer (EPMA) and analyzing the distribution of the platinum group elements.

The amount of the platinum group element in final catalyst is preferably 0. 1 to 5 g in 1 L of the final catalyst, more preferably 0.3 to 3 g, for enhancing the advantageous effect of the platinum group element during the partial oxidation reaction. Presence of platinum group element in an amount of more than 5 g per liter of the final catalyst does not assure the advantageous effect matching with the increase in cost by the use of platinum group element use. On the other hand, presence thereof in an amount of less than 0.1 may lead to insufficient catalytic activity.

For further raising the advantageous effect in increasing the catalytic performance of the refractory inorganic compound (a) supporting the platinum group element, it is preferable that the amount of the catalyst component contained in the final catalyst is preferably 35 to 400 g with respect to 1 L of monolithic carrier and the content of the refractory inorganic oxide (a), which supports the platinum group element, contained in the catalyst component is preferably in the range of 1 to 30 g, more preferably 1 to 20 g. Presence of the catalyst component in an amount of 35 g or more in 1 L of monolithic carrier allows further increase in catalytic activity. In contrast, supporting in an amount of over 400 g may lead to clogging and increase in pressure drop.

Any refractory inorganic oxides described above may also be used as the refractory inorganic oxide (b) according to the present invention, but the refractory inorganic oxide (b) does not support the platinum group element.

After a study to maximize the advantageous effect of the platinum group elements in the partial oxidation catalyst, the present inventors have found that it is possible to overcome the problems associated with the catalyst that contains only a refractory inorganic oxide (a) supporting the platinum group element by combined use of a refractory inorganic oxide (a) supporting the platinum group element and a refractory inorganic oxide (b) that does not support the platinum group element. Namely, the combined use of the refractory inorganic oxide (a) supporting the platinum group element and the refractory inorganic oxide (b) not supporting the platinum group elements suppressed deterioration in catalytic activity and increased the heat-resistance of the catalyst during the partial oxidation reaction, and allowed the final catalyst to exhibit the superior catalytic activity consistently for an extended period of time even when raw gases containing sulfur-containing substances were supplied.

For further raising the effect, the refractory inorganic oxide (b) is preferably cerium oxide, more preferably a mixture of cerium oxide and zirconium oxide. In particular, at least part of the cerium oxide and zirconium oxide are preferably contained as a cerium-zirconium mixed oxide in the mixture. Alternatively, plural inorganic oxides may be used together as the refractory inorganic oxide (b), and such mixtures are preferably, for example, mixtures of two or more inorganic oxides selected from the group consisting of cerium oxide, zirconium oxide, and cerium-zirconium mixed oxide, and mixtures of these inorganic oxides and additional other refractory inorganic oxides such as activated alumina and the like are also preferable. Further, for obtaining more advantageous effect, when the refractory inorganic oxide (a) contains activated alumina as an essential component, the combinations of at least two inorganic oxides selected from the group consisting of cerium oxide, zirconium oxide, and cerium-zirconium mixed oxide are most preferable as the refractory inorganic oxide (b).

For enhancing the durability of the catalyst according to the present invention (i.e., suppressing deterioration of catalytic activity at high temperature, and keeping better heat-resistance and thus catalytic activity for an extended period of time), it is desirable to add cerium oxide at relatively higher concentration than that of the activated alumina contained in the catalyst component of final catalyst and to specify the specific state of zirconium oxide relative to cerium oxide. More specifically, the mass ratio of activated alumina: cerium oxide in the catalyst component is preferably 100: 15 to 100: 60, more preferably 100: 20 to 100: 40, and the mass ratio of cerium oxide: zirconium oxide is preferably 100: 2 to 100: 60, more preferably 100: 4 to 100: 40.

When the mass ratio of activated alumina: cerium oxide is less than 100: 15, the advantageous effect of adding cerium oxide may become insignificant. In contrast, excessive addition of cerium oxide in a mass ratio of over 100: 60 is uneconomical, as it leads to saturation of the advantageous effect.

In the present invention, it is desirable to use one or more base metals as promoters. Such base metals include, for example, metals belonging to Groups I, II, IIIB, IV, V, VIB, VIIB, and VIII in the periodic table of the element, such as Na, K, Cs, Ni, Co, Fe, Cr, Cu, V, Pr, Mg, Mo, W, Mn, Zn, Ga, Y, Ti, Ba, Re, Bi, Nb, Ta, La, Ag, Au, and the like. It is desirable to add these base metals in the form of metal, metal oxide, solid solutions with the platinum group elements, or the like in the catalyst component, as they enhance and stabilize the catalytic activity of the platinum group element or allow increase in hydrogen selectivity. These base metal elements may be supported on the catalyst component.

The catalysts according to the present invention described above may be produced, for example, by the methods described below, but the methods may be altered arbitrarily according to the desired materials and composition. Therefore, unless explicitly described, the following production processes may be arbitrarily modified in any way.

The monolithic carrier of the present invention may be produced from the raw materials described above by any of the methods known in the art including slip casting, press molding, extrusion, sheet forming, and the like, and the production process is not particularly limited and may be modified according to the raw materials to be used, the size and shape of internal pores to be formed, and the like.

Various compounds (platinum element source) may be used as the platinum group element to be supported on the refractory inorganic oxide (a) according to the present invention. Examples of the platinum compounds include PtCl₄, H₂PtCl₆, Pt(NH₃)₄Cl₂, (NH₄)₂PtCl₂, H₂PtBr₆, NH₄[Pt(C₂H₄)Cl₃], Pt(NH₃)₄(OH)₂, Pt(NH₃)₂(NO₂)₂, and the like. Alternatively, examples of the rhodium compounds include (NH₄)₂RhCl₆, Rh(NH)₅Cl₃, RhCl₃, Rh(NO₃)₃, and the like. Further, examples of the palladium compounds include (NH₄)₂PdCl₄, Pd(NH₃)₄Cl₂, PdCl₂, Pd(NO₃)₂, and the like. Ruthenium compounds are for example RuCl₃, Ru(NO₃)₃, Ru₂(OH)₂Cl₄ · 7NH₃, and the like. Iridium compounds are for example (NH₄)₂IrCl₆, IrCl₃, H₂IrCl₆, and the like.

In addition, any publicly known refractory inorganic oxides may be used as the refractory inorganic oxide (a) supporting platinum group element. For example, commercially available activated alumina powders may be used. As described above, activated alumina powders preferably have a specific surface area of 25 to 250 m²/g. Alumina hydrates in the boehmite or pseudo-boehmite state and aluminum hydroxide, which turn to activated alumina by calcination after supporting, may also be used as raw materials. Alternatively, activated alumina that is prepared, for example, by adding alkali to an aqueous solution of aluminum salts such as aluminum nitrate and the like to give precipitation of aluminum hydroxide, and subsequently drying and calcinating the precipitate may also be used. Yet alternatively, activated alumina prepared by hydrolyzing an aluminum alkoxides such as aluminum isopropoxide or the like to give an alumina gel, and drying and calcinating the alumina gel by sol-gel process may also be used. The production process is not particularly limited, but it is desirable to use a refractory inorganic oxide having the properties described above.

Supporting of the platinum group element on the refractory inorganic oxide (a) may be accomplished preferably by the following production process, and basically is accomplished by bringing the refractory inorganic oxide in contact with a solution containing a substance having the platinum group element and drying and calcinating the treated inorganic oxide by any process.

For example, supporting of a platinum group element on activated alumina can be accomplished by bringing activated alumina into contact with a solution in which a compound containing the platinum group element is dissolved in a suitable amount, so that the contact gives the final catalyst containing the platinum group element in suitable amount, and thus directly supporting the platinum group element on the surface of the activated alumina, and then drying the treated alumina for removal of water and calcinating by any process. In addition, according to the desired purpose, for example, for increasing solubility and adjusting the pH of the solution, an inorganic acid such as hydrochloric acid, sulfuric acid, nitric acid, or the like or an organic acid such as acetic acid, oxalic acid, or the like may be added to the solution. The calcinating method is also not particularly limited, and any one of methods including impregnation, immersion, wet adsorption, spraying, coating, and other methods may be used. The impregnation method is preferred. The condition for the contact may also be modified arbitrarily. For example, the contact may be conducted under atmospheric pressure or under reduced pressure. The temperature during the contact is also not particularly limited, and thus the reaction may be conducted while heating as needed, preferably in the range of room temperature to about 90°C. In the present invention, it is also preferable to support two or more platinum group elements on the refractory inorganic oxide. In such cases, for example, both platinum group elements may be supported simultaneously by preparing a solution containing desired two or more source compounds for the platinum group element, and bringing the refractory inorganic oxide into contact with the solution. Alternatively, the solutions containing the platinum-group elements source compounds respectively are separately prepared, and then the refractory inorganic oxide may be brought into contact with these solutions sequentially. The calcination conditions are also not particularly limited, and for example the calcination may be conducted either in air or under reducing atmosphere. For example, calcination at a temperature in the range of 300 to 600°C for about 2 to 6 hours provides refractory inorganic oxides (a) supporting a platinum group element according to the present invention.

Incidentally, the refractory inorganic oxides (a) supporting a platinum group elements sometimes grow in particle diameter by aggregation depending on the production conditions, but for example, proper adjustment of the grinding period of wet-grinding for preparation of slurries allows production of the particles with an average particle diameter of 0.5 to 20 µm.

In the manner similar to the refractory inorganic oxide (a), any publicly known inorganic oxides may be used as the refractory inorganic oxide (b). For example, commercially available cerium oxide, zirconium oxide, or zirconium-cerium mixed oxides may be used. Alternatively, the cerium-zirconium mixed oxide may be used which is prepared, for example, by the following preparative methods of:
(1) mixing an aqueous cerium salt solution and an aqueous zirconium salt solution, and then drying and calcinating the solution;
(2) mixing an aqueous cerium salt solution and an aqueous zirconium salt solution, coprecipitating by using an ammonium compound or the like, filtering, washing, and then drying and calcinate the precipitates;
(3) blending cerium oxide and zirconium oxide, and then allowing the solid-state reaction thereof.
(4) adding an aqueous zirconium salt solution to cerium oxide, or adding an aqueous cerium salt solution to zirconium oxide, and then drying and calcinating the treated oxide; and
(5) impregnating, with an aqueous cerium salt solution and an aqueous zirconium salt solution, a refractory inorganic oxide such as activated alumina or the like, and then drying and sinter the resulting inorganic oxide.

In preparation of the cerium-zirconium mixed oxide, the starting materials for cerium and zirconium respectively are not particularly limited. As the cerium compound, may be used, for example, commercially available cerium oxide, cerium oxide sols, cerium-salt compounds such as cerium nitrate, cerium chloride, cerium carbonate, cerous acetate and the like; or cerium oxide and cerium hydroxide prepared therefrom. Suitable examples of the zirconium compounds are commercially available zirconium oxide, zirconium oxide sols, or alternatively various halides such as zirconium tetrachloride and the like or the partial hydrolysates thereof; various oxyhalides such as zirconyl chloride (zirconium oxychloride) and the like; various oxyacid salts such as zirconyl sulfate, zirconium nitrate, zirconyl nitrate, and the like; carbonate salts such as zirconium carbonate, zirconyl carbonate, and the like; various organic salts such as zirconium acetate, zirconyl acetate, zirconyl oxalate, and the like; zirconium alkoxides; and various complex salts; and the like. These raw materials may be of course used as they are or if desired after they are converted to zirconium oxide, zirconium hydroxide, or the like. The compound oxide (b) can be prepared using these raw materials by any one of the methods known in the art, for example, by calcinating them at a temperature of 300 to 800°C, preferably 400 to 800°C for 0.5 to 3 hours.

The contents of the refractory inorganic oxide (a) and the refractory inorganic oxide (b) may be adjusted respectively by properly controlling the amounts of addition.

The catalyst components can be supported on the monolithic carriers, for example, by supplying a refractory inorganic oxide (a) supporting the platinum group element and a refractory inorganic oxide (b) into a grinding machine such as a ball mill or the like, preparing a slurry by wet-grinding therein, and bring the slurry into contact with the carrier. It is favorable to use the process above for obtaining the advantageous effect, as it allows almost uniform supporting of the refractory inorganic oxide (a) and the refractory inorganic oxide (b) on the carrier.

During the preparation of the slurry, acids such as hydrochloric acid, sulfuric acid, nitric acid, acetic acid, oxalic acid, and the like; basic substances such as ammonia, tetraalkylammonium hydroxides, and the like; polymeric compounds such as polyacrylic acid, polyvinyl alcohol, and the like; or others may be added if desired for control of the viscosity and improvement in the stability of the slurry. The contact method of immersing the carrier in the slurry is favorable, as it allows more uniform supporting of the active ingredients on the carrier. After immersion, the excessive slurry still adhering to the carrier (e.g., slurry remaining in the cells thereof) is favorably removed by some means, for example by air blowing, and the carrier is then subjected to a drying process. The drying process is also not particularly limited, and water contained in the slurry remaining on the surface of the carrier may be removed by any drying means. The drying may be conducted either at room temperature or high temperature. Calcination of the carrier after drying is favorable, as it provides a carrier with the catalytically active components firmly bonded to the carrier. The calcination process is also not particularly limited, but is preferably carried out, for example, at 400 to 800°C, either in air or under a reducing atmosphere. If a desirable amount of catalytically active components cannot be supported on the carrier by the method above, the immobilization amount can be adjusted, for example, by repeatedly conducting the immersing procedures above after calcination.

When use of promoters is desired, the promoters such as metal salts or oxides may be mixed in the slurry above, or previously supported on the refractory inorganic oxide (a) or (b). The promoters can be supported in the similar manner to the methods for supporting the platinum group element on the refractory inorganic oxide (a). According to any one of the other methods known in the art, desirable base metals may be additionally supported on the catalyst after calcination. These base metal elements are preferably dispersed and supported on the catalyst component.

Relatively large aggregation particles, having a diameter of for example 0.5 to 20 µm in the final catalyst, of the refractory inorganic oxide (a) supporting the platinum group element, may be prepared by impregnating the refractory inorganic oxide powders above and pelletized refractory inorganic oxides with the platinum group element compound and pulverizing the resulting mixture, for example, by a mill to desirable particle diameter. The platinum group elements supporting refractory inorganic oxide (a) having an adjusted diameter prepared in this manner and the refractory inorganic oxide (b) not containing the platinum group element may be supported together on the monolithic carrier according to the method above. By the method, catalyst components [refractory inorganic oxides (a) and (b)] can be coated (supported) almost uniformly on the surface of the carrier (the coated layer of the refractory inorganic oxides may be referred to simply as coated layer).

Hereinafter, the method of producing a hydrogen-containing gas by partial oxidation of hydrocarbons using the catalyst according to the present invention will be described, but the process of producing the hydrogen-containing gas using the catalyst according to the present invention is not limited to the following examples and can be modified within the scope of the present invention.

According to the present invention, a hydrogen-containing gas mainly consisting of hydrogen and carbon monoxide is produced by partial oxidation of hydrocarbons, i.e., by bringing a mixed gas consisting of a hydrocarbon-containing gas and an oxygen-containing gas or pure oxygen gas (and additionally steam as needed) into contact with the above-described catalysts of the present invention.

The hydrocarbon-containing gases (raw gases) include, but are not limited to, light hydrocarbons such as methane, propane, butane, pentane, and hexane ; petroleum hydrocarbons such as gasoline, kerosene, naphtha; and the like. For example, natural or liquefied natural gases containing mainly methane and city gases mainly containing the liquefied natural gas, and LPGs (liquefied petroleum gases) mainly containing propane and butane are preferable as they are abundant in resources and are easy to obtain. Use of various synthetic liquid fuels such as methanol, dimethylether, and the like prepared from natural gas as a starting materials, bio gases mainly containing methane, and the like are also favorable from the viewpoint of efficient utilization of resources.

Use of the catalysts according to the present invention does not demand removal of sulfur-containing compounds even if the raw (hydrocarbon) gases contain the sulfur-containing compounds. For example, natural gases contain, in addition to hydrocarbons such as methane, ethane, propane, and the like, sulfur-containing compounds (e.g., to an extent of about 5 to 30 mg/Nm³ as total sulfur) as impurities. The use of hydrocarbon gases that contain the sulfurous compounds demanded prior elimination of the catalyst poison components, for example, by desulfurization treatment before the gases are brought into contacted with the catalyst in the conventional methods. However, the catalysts of the present invention are highly resistant to the catalyst poisoning components such as sulfur, and accordingly suppress deterioration in catalytic efficiency by the catalyst poisoning components over an extended period of time. Therefore, from the viewpoints of cost and maintenance, it is desirable to use the catalyst of the present invention, as it removes the need for additional installation of the equipment for eliminating catalyst poison components such as desulfurization or other equipment. In addition, cheap natural gas can be used as it is as the carbon-containing gas, allowing reduction in production cost.

The oxygen-containing gas of the present invention is also not particularly limited, and any oxygen-containing gases known in the art may be used. From the economic viewpoint, air is most preferable.

In the present invention, continuous flow reaction, in which the raw gas is brought into contact with the catalyst continuously, is preferable. According to the present invention, a mixed gas consisting of a hydrocarbon-containing gas and an oxygen-containing gas (or oxygen gas) is brought into contacted with the catalyst under a substantially adiabatic condition (without any external heating). The mixing ratio of the oxygen-containing gas to the hydrocarbon-containing gas (a ratio of oxygen molecule/carbon atom) is preferably adjusted in a range of 0.45 to 0.65 for efficient progress of the partial oxidation reaction. The ratio of the gases is more preferably in a range of 0.48 to 0.6.The pressure during the partial oxidation reaction is preferably normal pressure or more and 5 MPa-G or less, more preferably 3 MPa-G or less. In the reaction of the present invention, SV (gas space velocity) during the reaction may be arbitrarily selected, but is usually controlled in a range of 5,000 to 500,000 H⁻¹, preferably of 10,000 to 300,000 H⁻¹. It is also preferable to properly control the reaction conditions, for example by adjusting the flow rate of the mixed gas so that the temperature of the catalyst layer is maintained in the range of 600°C to 1,000°C for the purpose of suppressing the thermal deterioration of the catalyst and accelerating the partial oxidation reaction more efficiently.

Although addition of steam was required for prevention of carbon deposition in conventional partial oxidation reactions, use of the catalyst according to the present invention leads to practical elimination of carbon deposition (carbon deposition in zero or such a trace amount that the deposition does not affect the catalyst) without the addition of steam. Thus, no addition of steam is required in the present invention. In the case of the catalyst according to the present invention, addition of steam, however, increases the amount of hydrogen produced in the partial oxidation reaction. Although the addition of steam is inevitably accompanied by increase in cost, it improves the amount of hydrogen produced and provides an advantageous effect sufficiently compensating the increase in cost in the case of the catalysts according to the present invention. The addition of steam leads to simultaneous occurrence of both exothermic reactions (oxidation of hydrocarbons) and endothermic reactions (reaction between hydrocarbons and steam), resulting in suppression of the amount of heat generated compared to the case where steam is not added.

The oxygen-containing gas (or oxygen gas) and steam may be first added to the hydrocarbon-containing gas before being introduced into the catalyst layer, or supplied into the catalyst layer separately together with the hydrocarbon-containing gas.

In the present invention, the raw gas is preferably preheated before introduction into the catalyst layer for initiating the partial oxidation of hydrocarbons more efficiently. The preheating temperature may vary according to the kind of hydrocarbons used, the composition of the raw gas, the reaction condition, and the like, but is preferably 200 to 700°C, more preferably 300 to 600°C. After the reaction is initiated in the catalyst layer, it is not required to preheat the raw gas, as the catalyst temperature is automatically increased by reaction heat and the reaction proceeds autonomously. The raw gas may, of course, be preheated if desired, taking into account the heat balance and the like of the entire reaction system. Alternatively, instead of preheating the raw gas, the catalyst may be heated preferably to 200 to 700°C, more preferably to 300 to 600°C, for example, before introduction of the raw gas, and the heating discontinued after the reaction is initiated. The method of heating the catalyst is not particularly limited, and examples thereof include the methods of: (1) introducing heated air or nitrogen into the catalyst layer; (2) heating the catalyst layer externally with a heater; (3) introducing into the catalyst layer the gas containing the substances more easily oxidized than the raw hydrocarbon of the present invention, such as methanol, hydrogen, dimethylether, and the like and heating the catalyst by the reaction heat; and the like.

The hydrogen-containing gases of the present invention, which mainly consist of hydrogen and carbon monoxide, may be used as they are as fuels for fuel cells and as raw materials for chemical industry. Among the fuel cells, molten carbonate and solid oxide fuel cells, which are classified as the high temperature fuel cells, can utilize carbon monoxide and hydrocarbons as well as hydrogen. Thus, the hydrogen-containing gases obtained by the catalyst in the catalytic reactions according to the present invention are preferably used in these fuel cells.

The high temperature fuel cells are said to carry out the partial oxidation of hydrocarbons internally in the cells (internal reforming), in principle, by the catalytic action of electrode. Practically, however, these fuel cells raises the problems of carbon deposition and others depending on the kinds of hydrocarbons used and due to the impurities contained therein, making it difficult to reform the entire amount of hydrocarbon internally. Therefore, such hydrocarbons should be previously treated before they are introduced into the fuel cells. Such pre-reforming can also be favorably carried out by using the catalysts according to the present invention.

In addition, high-purity hydrogen gas can be obtained by reducing in the CO-conversion reaction the carbon monoxide concentration in the hydrogen-containing gas obtained in the partial oxidation reaction using the catalyst according to the present invention, or by eliminating the impurities by low temperature separation method, PAS method, hydrogen absorbing alloys, palladium membrane diffusion method, or the like. For example, for reduction the carbon monoxide concentration in the hydrogen-containing gas, carbon monoxide is oxidized to carbon dioxide by carrying out the CO-conversion reaction in a carbon monoxide converter while adding steam into the hydrogen-containing gas obtained in the partial oxidation reaction (or without adding steam). The catalysts used in the CO-conversion reaction include, for example, various publicly known catalysts mainly based on copper or iron. Although the CO-conversion reaction can reduce the carbon monoxide concentration to about 1%, carbon monoxide poisons the catalytic activity of the electrodes used in low temperature polymer electrolyte fuel cells even at the concentration. For prevention of poisoning of the catalyst, the carbon monoxide concentration is preferably reduced to a concentration of not larger than 100 ppm. For reducing the carbon monoxide concentration to 100 ppm or less, it is desirable, for example, to add a small amount of oxygen to the gas after the CO-conversion reaction and thus oxidize and remove carbon monoxide selectively.

### EXAMPLE

### PREPARATIVE EXAMPLE 1

Carrier: A cordierite honeycomb carrier (NGK INSULATORS, LTD.) having 400 cells per square inch of cross section area was cut into pieces with a diameter of 25.4 mmφ and a length of 77 mm (carrier volume: 39.0 ml) as the carrier for this EXAMPLE.

Platinum group elements supporting activated alumina: Activated alumina (200 g) having a specific surface area of 155 m²/g was impregnated for mixture in a mixed solution of an aqueous solution of nitric acid of dinitrodiamine platinum containing 1.075 g of platinum and an aqueous solution of rhodium nitrate containing 0.538 g of rhodium. The resulting alumina mixture was dried at 150°C for 15 hours. After drying, the powder was calcinated at 400°C in air for 2 hours, to give an activated alumina having platinum group elements in a total amount of 0.80 mass % (platinum: 0.53 mass %, and rhodium: 0.27 mass %).

Cerium-zirconium mixed oxide: A cerium carbonate powder was calcinated at 400°C for 2 hours, and then crushed to yield cerium oxide powder. An aqueous solution of zirconium oxynitrate was gradually added to the cerium oxide powders until the mass ratio of cerium oxide: zirconium oxide becomes 100: 30, and the mixture was blended uniformly. The resulting mixed slurry was dried at 120°C and the resulting substance thus obtained was calcinated at 500°C for 1 hour to yield a cerium-zirconium mixed oxide.

Preparation of slurry: 111.3 g of the platinum group elements supporting activated alumina, 36.0 g of the cerium-zirconium complex oxide, purified water, and acetic acid were placed in a ball mill and wet-ground to give an aqueous slurry.

Preparation of catalyst: The afore-described carrier was immersed in the slurry and coated with the slurry. After separation of the carrier from the slurry, the slurry remaining in the cells of the carrier was blown off with compressed air. The resulting carrier was dried at 150°C to support the catalyst component on the carrier and calcinated in air for 1 hour (500°C) to support the catalyst component firmly on the carrier. The carrier supporting the catalyst component above was further immersed in the same slurry above, and the same procedures were repeated to give a catalyst supporting 9.8 g of the catalyst components (final catalyst). The final catalyst supported 252 g of catalyst components in 1 L of carrier of the final catalyst, and a total amount of 1.52 g of platinum group elements (platinum: 1.01 g, and rhodium: 0.51 g) in 1 L of final catalyst. The mass ratio of activated alumina: cerium oxide: zirconium oxide in the final catalyst was 100: 25: 7.5. Photos of the coating layer of the final catalyst are taken at randomly selected 30 sites at a magnification of 3000 using an Electron Probe Micro Analyzer (EPMA) to examine the distribution of the Pt-Rh-containing activated alumina particles therein. Analysis of the photos revealed that the Pt-Rh-containing activated alumina particles having an average particle diameter of 0.7 µm were uniformly distributed.

### PREPARATIVE EXAMPLE 2

In a similar manner to PREPARATIVE EXAMPLE 1, an activated alumina supporting platinum group elements in an amount of 12 mass % (platinum: 10 mass %, rhodium: 2 mass %) was prepared. Additionally, in a similar manner to PREPARATIVE EXAMPLE 1, a cerium-zirconium mixed oxide containing cerium oxide and zirconium oxide at a mass ratio of 100: 20 was prepared. 8.78 g of the platinum group elements supporting activated alumina, 33.8 g of the cerium-zirconium mixed oxide, and 104.8 g of activated alumina having a specific surface area of 106 m²/g were placed in a ball mill, and slurry was prepared in a similar manner to PREPARATIVE EXAMPLE 1. Thus, a catalyst was prepared from the slurry. The carrier of the final catalyst thus obtained supported about 9.8 g of the catalyst components (equivalent to 252 g of catalyst components in 1 L of final catalyst carrier). The carrier also supported platinum group elements in the total amount of 1.80 g (platinum: 1.50 g, and rhodium: 0.30 g) in 1 L of final catalyst. The mass ratio of activated alumina: cerium oxide: zirconium oxide in the catalyst component was 100: 25: 5. Photos of the coating layer of the final catalyst are taken at randomly selected 30 sites at a magnification of 3000 using an Electron Probe Micro Analyzer (EPMA) to examine the distribution of the Pt-Rh-containing activated alumina particles therein in a similar manner to PREPARATIVE EXAMPLE 1. Analysis of the photos revealed that the Pt-Rh-containing activated alumina particles (having an average particle diameter of 4 µm) were uniformly distributed.

### PREPARATIVE EXAMPLE 3

In a similar manner to PREPARATIVE EXAMPLE 1, an activated alumina supporting platinum group elements in an amount of 20 mass % (platinum: 15 mass %, and rhodium: 5 mass %) was prepared. Activated alumina (200 g) having a specific surface area of 106 m²/g was immersed in an aqueous solution containing both cerium nitrate and zirconium oxynitrate. The treated activated alumina was separated, dried at 120°C, and calcinated in air for 1 hour (500°C), to give an activated alumina supporting cerium-zirconium mixed oxide. The mass ratio of activated alumina: cerium oxide: zirconium oxide in the compound oxide was 100: 30: 6. 8.78 g of the platinum group elements supporting activated alumina, 127.5 g of the cerium-zirconium mixed oxide, and 11.7 g of activated alumina having a specific surface area of 106 m²/g were placed in a ball mill, and a slurry was prepared in a similar manner to PREPARATIVE EXAMPLE 1. Thus, a catalyst was prepared from the slurry. The carrier of the final catalyst thus obtained supported about 9.9 g of the catalyst components (equivalent to 253 g of catalyst components in 1 L of catalyst carrier). The carrier also supported platinum group elements in the total amount of 3.0 g (platinum: 2.25 g, rhodium: 0.75 g) in 1 L of final catalyst, and the mass ratio of activated alumina: cerium oxide: zirconium oxide in the catalyst component was 100: 25: 5. EPMA analysis of the coating layer of the final catalyst conducted in a similar manner to PREPARATIVE EXAMPLE 1 revealed that the Pt-Rh-containing activated alumina particles (having an average particle diameter of 7 µm) were uniformly distributed.

### PREPARATIVE EXAMPLE 4

8.78 g of the activated alumina supporting platinum group elements in an amount of 12 mass % (platinum: 10 mass %, rhodium 2 mass %) prepared in PREPARATIVE EXAMPLE 2 was weighed and placed in a ball mill together with purified water and acetic acid. The mixture was wet-ground for 12 hours therein. To the aqueous slurry, 33.8 g of cerium-zirconium mixed oxide prepared in PREPARATIVE EXAMPLE 2, 104.8 g of activated alumina having a specific surface area of 106 m²/g, and purified water was added, and wet-grinding was continued for 20 hours. A catalyst was prepared from the aqueous slurry thus obtained in a similar manner to PREPARATIVE EXAMPLE 1. The final catalyst obtained supported 9.7 g of catalyst components on the carrier (equivalent to 248 g of the catalyst components in 1 L of the carrier). The carrier also supported platinum group elements in the total amount of 1.77 g (platinum: 1.47g, and rhodium: 0.30 g) in 1 L of final catalyst, and the weight ratio of activated alumina: cerium oxide: zirconium oxide in the catalyst component was 100: 25: 5. EPMA analysis of the coating layer of the final catalyst conducted in a similar manner to PREPARATIVE EXAMPLE 1 revealed that there were no Pt-Rh-containing activated alumina particles having an average particle diameter of 0.5 µm or more.

### PREPARATIVE EXAMPLE 5

In a similar manner to PREPARATIVE EXAMPLE 1, an activated alumina supporting platinum group elements in an amount of 10.5 mass % (platinum: 9.0 mass %, and rhodium: 1.5 mass %) was prepared. Additionally, in a similar manner to PREPARATIVE EXAMPLE 3, a cerium-zirconium mixed oxide supported on activated alumina, which contains activated alumina, cerium oxide and zirconium oxide at a weight ratio of 100: 50: 10, was prepared.

8.43 g of the platinum group elements supporting activated alumina, 126.4 g of the cerium-zirconium mixed oxide, and 12.3 g of activated alumina having a specific surface area of 106 m²/g were weighed and mixed, and a catalyst was prepared from the mixture in a similar manner to PREPARATIVE EXAMPLE 1. The carrier of the final catalyst thus obtained supported about 10.0 g of the catalyst components (equivalent to 256 g of catalyst components in 1 L of final catalyst carrier). The final catalyst supported platinum group elements in the total amount of 1.54 g (platinum: 1.32g, and rhodium: 0.22g) per L, and the mass ratio of activated alumina: cerium oxide: zirconium oxide in the catalyst component was 100: 40: 8. EPMA analysis of the coating layer of the final catalyst conducted in a similar manner to PREPARATIVE EXAMPLE 1 revealed that the (having an average particle diameter of 3 µm) were uniformly distributed.

### PREPARATIVE EXAMPLE 6

A catalyst was prepared in a similar manner to PREPARATIVE EXAMPLE 2 except that the mass ratio of cerium oxide: zirconium oxide is 100: 40. The carrier of the final catalyst thus obtained supported 9.7 g of catalyst components (equivalent to 249 g of catalyst components in 1 L of carrier). The final catalyst supported platinum group elements in the total amount of 1.78 g (platinum: 1.48g, and rhodium: 0.30 g), and the mass ratio of activated alumina: cerium oxide: zirconium oxide in the catalyst component was 100: 22: 9. EPMA analysis of the coating layer of the final catalyst conducted in a similar manner to PREPARATIVE EXAMPLE 1 revealed that the Pt-Rh-containing activated alumina particles (having an average particle diameter of 4 µm) were uniformly distributed.

### PREPARATIVE EXAMPLE 7

In a similar manner to PREPARATIVE EXAMPLE 1, an activated alumina supporting only rhodium as a platinum group element in an amount of 12 mass % was prepared. Additionally, in a similar manner to PREPARATIVE EXAMPLE 2, a cerium-zirconium mixed oxide containing cerium oxide and zirconium oxide at a mass ratio of 100: 20 was prepared. 5.85 g of the platinum group elements supporting activated alumina, 33.8 g of the cerium-zirconium mixed oxide, and 107.5 g of activated alumina having a specific surface area of 106 m²/g were placed in a ball mill. A slurry was prepared in a similar manner to PREPARATIVE EXAMPLE 1 and a catalyst was prepared from the slurry. The carrier of the final catalyst thus obtained supported about 9.6 g of the catalyst components (equivalent to 247 g of catalyst components in 1 L of carrier). The final catalyst also supported 1.18 g of rhodium, and the mass ratio of activated alumina: cerium oxide: zirconium oxide in the catalyst component was 100: 25: 5. EPMA analysis of the coating layer of the final catalyst conducted in a similar manner to PREPARATIVE EXAMPLE 1 revealed that the Rh-containing activated alumina particles (having an average particle diameter of 4 µm) were uniformly distributed.

### PREPARATIVE EXAMPLE 8

A catalyst was prepared in a similar manner to PREPARATIVE EXAMPLE 2 except that an activated alumina supporting only iridium in an amount of 12 mass % as a platinum group element was prepared using an aqueous hexachloroiridic acid (H₂IrCl₆) solution. The carrier of the final catalyst thus obtained supported 9.9 g of catalyst components (equivalent to 254 g of catalyst components in 1 L of carrier). The final catalyst supported iridium in an amount of 1.82 g in 1 L of the final catalyst, and the mass ratio of activated alumina: cerium oxide: zirconium oxide in the catalyst component was 100: 25: 5. EPMA analysis of the coating layer of the final catalyst conducted in a similar manner to PREPARATIVE EXAMPLE 1 revealed that the Ir-containing activated alumina particles (having an average particle diameter of 4 µm) were uniformly distributed.

### PREPARATIVE EXAMPLE 9

A catalyst was prepared in a similar manner to PREPARATIVE EXAMPLE 2 except that a cerium oxide (having a specific surface area of 80 m²/g) was used replacing the activated alumina for supporting platinum group elements in PREPARATIVE EXAMPLE 2. The carrier of the final catalyst thus obtained supported 9.8 g of catalyst components (equivalent to 251 g of catalyst components in 1 L of carrier). The final catalyst supported platinum group element in the total amount of 1.79 g per L (platinum: 1.49g, and rhodium: 0.30 g), and the mass ratio of activated alumina: cerium oxide: zirconium oxide in the catalyst component was 100: 34: 5. EPMA analysis of the coating layer of the final catalyst conducted in a similar manner to PREPARATIVE EXAMPLE 1 revealed that the Pt-Rh-containing activated cerium oxide particles (having an average particle diameter of 7 µm) were uniformly distributed.

### PREPARATIVE EXAMPLE 10

A catalyst was prepared in a similar manner to PREPARATIVE EXAMPLE 2 except that a zirconium oxide (having a specific surface area of 60 m²/g) was used replacing the activated alumina for supporting platinum group elements in PREPARATIVE EXAMPLE 2. The carrier of the final catalyst thus obtained supported 9.6 g of catalyst components (equivalent to 246 g of catalyst components in 1 L of carrier). The final catalyst supported platinum group element in the total amount of 1.76 g per L (platinum: 1.47g, and rhodium: 0.29g), and the mass ratio of activated alumina: cerium oxide: zirconium oxide in the catalyst component was 100: 27: 13. EPMA analysis of the coating layer of the final catalyst conducted in a similar manner to PREPARATIVE EXAMPLE 1 revealed that the Pt-Rh-containing activated alumina particles (having an average particle diameter of 7 µm) were uniformly distributed.

### PREPARATIVE EXAMPLE 11

A catalyst was prepared in a similar manner to PREPARATIVE EXAMPLE 2 except that 12.2 g of the cerium-zirconium mixed oxide prepared in PREPARATIVE EXAMPLE 2 and 126.4 g of activated alumina having a specific surface area of 106 m²/g were used. The carrier of the final catalyst thus obtained supported 10.0 g of catalyst components (equivalent to 255 g of catalyst components in 1 L of carrier). The final catalyst also supported platinum group elements in the total amount of 1.82 g per L (platinum: 1.52g, and rhodium: 0.30 g), and the mass ratio of activated alumina: cerium oxide: zirconium oxide in the catalyst component was 100: 7.6: 1.5. EPMA analysis of the coating layer of the final catalyst conducted in a similar manner to PREPARATIVE EXAMPLE 1 revealed that the Pt-Rh-containing activated alumina particles (having an average particle diameter of 4 µm) were uniformly distributed.

### PREPARATIVE EXAMPLE 12

A catalyst was prepared in a similar manner to PREPARATIVE EXAMPLE 2 except that the mass ratio of cerium oxide: zirconium oxide was 100: 1. The carrier of the final catalyst thus obtained supported 9.8 g of catalyst components (equivalent to 250 g of catalyst components in 1 L of carrier). The final catalyst also supported platinum group elements in the total amount of 1.79 g in 1 L of the final catalyst (platinum: 1.49g, and rhodium: 0.30 g), and the mass ratio of activated alumina: cerium oxide: zirconium oxide in the catalyst component was 100: 30: 0.3. EPMA analysis of the coating layer of the final catalyst conducted in a similar manner to PREPARATIVE EXAMPLE 1 revealed that Pt-Rh-containing activated alumina particles (having an average particle diameter of 4 µm) were uniformly distributed.

### PREPARATIVE EXAMPLE 13

In a similar manner to PREPARATIVE EXAMPLE 1, an activated alumina supporting platinum group elements in an amount of 0.3 mass % (platinum: 0.2 mass %, and rhodium: 0.1 mass %) was prepared. 122.7 g of the platinum group elements supporting activated alumina and 24.6 g of the cerium-zirconium mixed oxide prepared in PREPARATIVE EXAMPLE 1 were placed in a ball mill. A slurry was prepared in a similar manner to PREPARATIVE EXAMPLE 1 and a catalyst was prepared from the slurry. The carrier of the final catalyst thus obtained supported about 9.8 g of the catalyst components (equivalent to 252 g of catalyst components in 1 L of final catalyst carrier). The carrier also supported platinum group elements in the total amount of 0.63 g (platinum: 0.42g, and rhodium: 0.21g) in 1 L of final catalyst. The mass ratio of activated alumina: cerium oxide: zirconium oxide in the catalyst component was 100: 15: 5. EPMA analysis of the coating layer of the final catalyst conducted in a similar manner to PREPARATIVE EXAMPLE 1 revealed that Pt-Rh-containing activated alumina particles (having an average particle diameter of 0.5 µm) were uniformly distributed.

### PREPARATIVE EXAMPLE 14 (comparative example)

134.1 g of activated alumina having a specific surface area of 106 m²/g and 12.2 g of the cerium-zirconium mixed oxide prepared in PREPARATIVE EXAMPLE 2 were placed in a ball mill. Into the ball mill, an aqueous nitric acid solution of dinitrodiamine platinum containing 0.878 g of platinum, an aqueous rhodium nitrate solution containing 0.176 g of rhodium, purified water, and acetic acid were added. The resulting mixture was wet-ground for 20 hours to give a uniform aqueous slurry. A catalyst was prepared from the slurry in a similar manner to PREPARATIVE EXAMPLE 1. The carrier of the final catalyst thus obtained supported about 9.8 g of the catalyst components (equivalent to 252 g of catalyst components in 1 L of carrier). The final catalyst supported platinum group element in the total amount of 1.80 g in 1 L of the final catalyst (platinum: 1.50 g, and rhodium: 0.30 g), and the mass ratio of activated alumina: cerium oxide: zirconium oxide in the catalyst component was 100: 7.6: 1.5.

### EXAMPLE 1.

The catalyst prepared in PREPARATIVE EXAMPLE 1 was filled in an inconel reaction tube covered with refractory for insulation, and the partial oxidation reactions were evaluated using a reactor. A mixed gas consisting of city gas 13A as raw hydrocarbons containing 87.3% methane and 5 ppm of sulfur, and air as oxygen-containing gas, which was previously adjusted to an oxygen/carbon ratio of 0.54, was used for the test.

In initiating the reaction, preheated reaction gas was supplied into the reactor until the temperature of the reaction gas reaches 350°C. After confirming the steady progress of the reaction in the catalyst layer, heating of the reaction gas was terminated, and the reaction was continued adiabatically while supplying the reaction gas at room temperature at an SV of 30,000 H⁻¹. The temperature in the catalyst layer was over 800°C during the reaction. The composition of the resulting product gas was analyzed by gas chromatography (Shimadzu Corp.: Gas Chromatograph GC-8A). As a result, the conversion rate of city gas 13A was 79%; the hydrogen selectivity was 89%; and the carbon monoxide selectivity was 81%.

The test was continued for 2,000 hours under the above reaction condition. The conversion rate of the natural gas was stable at 78 to 80%, and the hydrogen selectivity and the carbon monoxide selectivity were also stable during the entire test period. After the reaction, the catalyst was removed and subjected to an elemental analysis with a fluorescent X-ray analyzer, revealing that there was no change in the content of the catalyst component during the reaction. No carbon deposition was observed.

### EXAMPLE 2.

The catalyst prepared in PREPARATIVE EXAMPLE 2 was filled in the same reactor as that used in EXAMPLE 1, and the partial oxidation reactions were evaluated using the reactor. A mixed gas consisting of natural gas (raw hydrocarbons containing 93.5% methane and 19.3mg/Nm³ of sulfur) and air (oxygen-containing gas), which was previously adjusted to the oxygen/carbon ratio of 0.54, was used as the reaction gas.

In initiating the reaction, preheated reaction gas was supplied into the reactor until the temperature the reaction gas reaches 370°C. After confirming the steady progress of the reaction in the catalyst layer, heating of the reaction gas was terminated, and the reaction was continued adiabatically while supplied the reaction gas at room temperature at an SV of 20,000 H⁻¹. The temperature in the catalyst layer was over 800°C during the reaction. The product gas was analyzed in a similar manner to EXAMPLE 1, revealing that the conversion rate of the natural gas was 75%; the hydrogen selectivity, 87%; and the carbon monoxide selectivity, 77%. The test was continued for 5,000 hours under the above reaction condition. The conversion rate of the natural gas was stable at 74 to 76%, and the hydrogen selectivity and the carbon monoxide selectivity were also stable during the entire test period. In addition, no increase in pressure drop of the catalyst layer was observed during the reaction.

### Accelerated durability test

### EXAMPLE 3.

The catalysts prepared in PREPARATIVE EXAMPLEs 2 to 14 above were cut into pieces of 7 x 7 x 10 mm in size respectively for accelerated durability tests. The tests were conducted in a reactor similar to that used in EXAMPLE 1, employing industrial methane (containing 99.5% or more methane and 0.7 ppm of sulfur) as the raw gas and air as the oxygen-containing gas. For evaluation of initial performance of the catalysts, the reactions were conducted under the condition of an oxygen/carbon ratio of 0.54, an SV of 40,000 H⁻¹, and a reaction gas inlet temperature of 40°C. After the initial evaluation, the reaction condition was changed to an oxygen/carbon ratio of 0.54, an SV of 400,000 H⁻¹, and a reaction gas inlet temperature of 250°C, and the reaction was continued for 150 hours. Subsequently, the performance of the catalysts after the durability tests was determined while continuing the reaction under the initial evaluation condition.

| Catalyst rate | Initial methane conversion rate (%) | Methane conversion after durability test (%) |
|---|---|---|
| PREPARATIVE EXAMPLE 2 | 83 | 80 |
| PREPARATIVE EXAMPLE 3 | 85 | 83 |
| PREPARATIVE EXAMPLE 4 | 82 | 74 |
| PREPARATIVE EXAMPLE 5 | 83 | 80 |
| PREPARATIVE EXAMPLE 6 | 82 | 78 |
| PREPARATIVE EXAMPLE 7 | 84 | 83 |
| PREPARATIVE EXAMPLE 8 | 82 | 79 |
| PREPARATIVE EXAMPLE 9 | 83 | 77 |
| PREPARATIVE EXAMPLE 10 | 82 | 76 |
| PREPARATIVE EXAMPLE 11 | 81 | 72 |
| PREPARATIVE EXAMPLE 12 | 83 | 76 |
| PREPARATIVE EXAMPLE 13 | 79 | 65 |
| PREPARATIVE EXAMPLE 14 | 82 | 57 |

The decrease in methane conversion rate of the catalysts prepared in PREPARATIVE EXAMPLE 3 and PREPARATIVE EXAMPLEs 5 to 8 before and after the accelerated durability test was almost at the same level as that of the catalyst prepared in PREPARATIVE EXAMPLE 2, and thus these catalysts were considered to be favorable in durability. With respect to the catalyst prepared in PREPARATIVE EXAMPLE 14, the initial methane conversion rate was similar to those of the catalysts prepared in the PREPARATIVE EXAMPLEs above, but the decrease in methane conversion rate after the accelerated durability test was larger, and thus the catalyst was considered to be not sufficiently high in durability for use as a practical catalyst. Although the catalysts prepared in PREPARATIVE EXAMPLE 4 and PREPARATIVE EXAMPLEs 9 to 13 were slightly poorer in durability than that prepared in PREPARATIVE EXAMPLE 2, but were greatly improved in durability when compared to the catalyst of the PREPARATIVE

### EXAMPLE 14.

The partial oxidation catalysts according to the present invention retained higher levels of hydrogen selectivity and catalytic activity than conventional partial oxidation catalysts over an extended period of time even under the high raw hydrocarbon load condition.

### INDUSTRIAL APPLICABILITY

As described above, the partial oxidation catalysts according to the present invention are poisoning-resistant and high-activity catalysts for partial oxidation of hydrocarbons that can retain the catalytic activity over an extended period of time and can suppress the deterioration in catalytic activity under a high temperature and the deposition of carbon thereon. Because of the advantageous effects, the catalysts for partial oxidation according to the present invention can provide improved performance of fuel cells and the like, when used in fuel cells such as solid oxide fuel cells or polymer electrolyte fuel cells. For example, the fuel cells utilizing the catalysts for partial oxidation according to the present invention are useful for cogeneration-type private power generation equipment for home or business use, replacement of thermal power plant, or smaller distributed power plant, electric vehicle, and the like, and contribute to enhancing the energy efficiency thereof.

In addition, the process for producing hydrogen-containing gases according to the present invention can be used, for example, for adjusting the heat balance of the reaction system and the composition of the product gases including the ratio of hydrogen and carbon monoxide in the generated gas, or attaining the desired production rate of the hydrocarbons, by adjusting the mixing ratio of hydrocarbons, oxygen and steam by adding steam into the reaction gas.

## Claims

1. A partial oxidation catalyst of a hydrocarbon,
comprising a monolithic carrier immobilizingly supporting a catalyst component,
the catalyst component further comprising a refractory inorganic oxide (a) supporting a platinum group element and a refractory inorganic oxide (b).

2. The partial oxidation catalyst according to claim 1,
wherein an amount of the platinum group element supported on the refractory inorganic oxide (a) is 0.4 to 40 mass %.

3. The partial oxidation catalyst according to claim 1 or 2,
wherein an average particle diameter (as determined by Electron Probe Micro Analyzer) of the refractory inorganic oxide (a) supporting the platinum group element is 0.5 to 20 µm.

4. The partial oxidation catalyst according to any one of claims 1 to 3,
wherein the catalyst component is supported in an amount of 35 to 400 g with respect to 1 L of the monolithic carrier and the refractory inorganic oxide (a) contained in the catalyst component is 1 to 30 g.

5. The partial oxidation catalyst according to any one of claims 1 to 4,
wherein the platinum group element supported on the refractory inorganic oxide (a) is 0.1 to 5 g with respect to 1 L of the monolithic carrier.

6. The partial oxidation catalyst according to any one of claims 1 to 5,
wherein the platinum group element is at least one element selected from the group consisting of platinum, rhodium, and iridium.

7. The partial oxidation catalyst according to any one of claims 1 to 6,
wherein 50 mass % or more of the platinum group element is platinum.

8. The partial oxidation catalyst according to claim 7,
wherein the platinum group elements are platinum and rhodium.

9. The partial oxidation catalyst according to any one of claims 1 to 8,
wherein the refractory inorganic oxide (a) supporting the platinum group element is at least one selected from the group consisting of activated alumina, cerium oxide, and zirconium oxide.

10. The partial oxidation catalyst according to any one of claims 1 to 9,
wherein the refractory inorganic oxide (a) supporting the platinum group element comprises activated alumina and the refractory inorganic compound (b) comprises at least two oxides selected from the group consisting of cerium oxide, zirconium oxide, and cerium-zirconium mixed oxide.

11. The partial oxidation catalyst according to claim 10,
wherein a mass ratio of the activated alumina: the cerium oxide contained in said catalyst component is 100: 15 to 100: 60,
and a mass ratio of the cerium oxide: zirconium oxide is 100: 2 to 100: 60.

12. A method of producing the partial oxidation catalyst according to any one of claims 1 to 11,
comprising the steps of:
bringing a monolithic carrier in contact with a slurry of a catalyst component containing a refractory inorganic oxide (a) supporting the platinum group element and a refractory inorganic oxide (b);
and calcinating the resulting monolithic carrier.

13. The partial oxidation catalyst according to claim 10 or 11 produced by the process comprising the steps of:
bringing a monolithic carrier into contact with a slurry containing an activated alumina powder whereon a platinum group element is supported and a powder which is comprised of at least part of cerium oxide and zirconium oxide being present as a mixed oxide;
and calcinating the resulting monolithic carrier.

14. A process of producing a hydrogen-containing gas using the partial oxidation catalyst according to any one of claims 1 to 11,
comprising the step of bringing a mixed gas containing a hydrocarbon-containing gas and an oxygen gas or an oxygen-containing gas into contact with said partial oxidation catalyst for partially oxidizing the hydrocarbon contained in said mixed gas in a hydrogen-containing gas.

15. The process of producing the hydrogen-containing gas using the partial oxidation catalyst according to claim 14,
wherein said mixed gas contains steam.

16. A method of using the hydrogen-containing gas obtained by the process of producing hydrogen-containing gas according to claim 14 or 15, or a method of using hydrogen produced from said hydrogen-containing gas,
wherein said hydrogen-containing gas and/or hydrogen are used as a fuel for fuel cells.
